Europäisches Patentamt

European Patent Office

Office européen des brevets

(11) Publication number: **0 483 710 A1**

## EUROPEAN PATENT APPLICATION

(21) Application number: **91118313.5**

(22) Date of filing: **28.10.91**

(51) Int. Cl.⁵: **B60C 9/09**, B60C 15/06

(30) Priority: **29.10.90 IT 2190090**

(43) Date of publication of application:
**06.05.92 Bulletin 92/19**

(84) Designated Contracting States:
**DE ES FR GB**

(71) Applicant: **PIRELLI COORDINAMENTO PNEUMATICI Società per Azioni**
**Piazzale Cadorna, 5**
**I-20123 Milan(IT)**

(72) Inventor: **Orlandi, Michele**
**Via G. Galilei 11/1**
**Vaprio d'Adda (MI)(IT)**

(74) Representative: **Guella, Paolo et al**
**Pirelli S.p.A., Piazzale Cadorna, 5**
**I-20123 Milan(IT)**

(54) **Radial tire provided with a sidewall reinforcement element.**

(57) A radial tire for two-wheel or four-wheel motor-driven vehicles having one or more carcass plies (3) folded back around the bead cores. In each sidewall there is a carcass, bead cores, a tread band and a belt structure between the tread band and the carcass and a reinforcement ply (7) axially external to the carcass ply and having textile cords inclined at an angle of 30° to 60° relative to the radial direction.

The reinforcement ply is folded back axially inwardly from the outside to the inside around the bead core at one end and extends radially outwardly to the zone of the maximum width of the tire, to be spaced apart from the belt edges by a distance not greater than 10% of the section height of the tire.

Fig. 1

The present invention relates to a tire for motor-driven vehicle wheels, of the radial type, exhibiting an improved torsional strength at the tire sidewall.

The tire of the invention applies in a particularly advantageous manner to very high performance tires, intended for use at high speeds, while the invention is applicable to tires used both for four-wheel vehicles and two-wheel vehicles.

The invention, as above stated, is concerned with radial tires, that is tires in which the cords of the carcass plies lie in planes containing the rotational axis of the tire. In these tires therefore the cords meet the mid-circumferential or equatorial plane of the tire at an angle of about 90°. In addition, on the carcass, under the tread, provision is also made for a belt structure formed with radially superposed strips of mutually crossed cords which are inclined relative to the circumferential direction of the tire.

The sidewall is the structurally weakest element of the tire, as it is reinforced with cords disposed along the radial direction and therefore only suitable to efficiently counteract the tensile stresses exerted on the tire by the effect of the inflation pressure. The carcass cords in the tires of the present invention are of the textile type and therefore unable to resist compressive stresses.

In tires of the radial type designed for use at very high speeds therefore problems can arise when the vehicle passes through a transitory acceleration or a braking stage, because the increased (or decreased) torque cannot be immediately transmitted to the tire tread.

For example, following a fast acceleration, the torque is transmitted from the wheel hub to the tread band through the sidewall cords. These cords however do not have a sufficient strength and are subjected to a starting deformation causing a relative rotation of the bead with respect to the tread, before the resistance offered by the carcass structure becomes anyway sufficient to transmit the accelerating torque. A similar phenomenon occurs in the case of sudden braking at high speed.

In these known tires of the type both for two-wheel vehicles and four-wheel vehicles, there is therefore a staggering between the intervention of the accelerator or brake, and the braking or accelerating action on the car itself, due to the deformation of the carcass that does not possess enough stiffness to transmit the torque; thus, for this reason, there is not sufficient counteraction to the onset (as the speed increases) of the phenomenon known as dynamic wave. The phenomenon also causes the loss of adhesion of the tire to the road and the decay of the structural resistance of the belt and the carcass.

In order to reduce this relative inadequacy of known radial tires different ways have been attempted, for example the sectional H/C ratio of the tire has been reduced, and the belt and/or carcass structure has been reinforced, specifically along the sidewalls.

In particular in some tires reinforcement elements have been applied that extend along the sidewalls in the area included between the bead core and the belt end. In other known tires reinforcements have been introduced that start under the belt plies and extend till the bead.

There are also tires provided with reinforcement pieces anchored to the bead core, which however do not go, in a radial direction, substantially beyond the center line (the line of maximum width) of the tire sidewall: but in this case (see US 4,024,901) they do not aim at reinforcing the sidewalls, but rather at stiffening the bead.

Therefore, the sidewall reinforcement pieces provided in known radial tires that are not folded back around the bead core during tire manufacture do not undergo the same conformation as the carcass ply and therefore are insufficiently preloaded to tensile stresses by the tire inflation pressure. Such pieces thereby greatly lose the capability of cooperating with the carcass ply when submitted to crushing stresses, drift stresses and to the torque.

As a result, in order to exert an efficient sidewall supporting action in the described situations, the number and thickness of these reinforcement elements would be so high (see US 3,703,203) that they would unacceptably reduce the comfort during a normal ride.

On the other hand, as far as regards the sidewall reinforcements that are folded back around the bead core when they do not extend radially outwardly a sufficient distance they are not suitable for accomplishing the aim of the invention, whereas when they extend in a such radial extent to overlap the belt edges (see US 3,058,509; US 4,573,054; US 4,744,400) they would unacceptably reduce the comfort during a normal ride.

This reduction of comfort is accepted only with radial tires used on two-wheel vehicles, where the reinforcement of the belt edge so obtained avoids the further drawback, which take place at high speeds when going around a curve with said radial tires, that is the insufficient roadholding.

This drawback results from the fact that, since the tires for motorcycles have a very marked camber, in order to enable the wheel to tilt greatly on a curve (a motorcycle tilting can reach 50°-55°) so that it may work like a cone rolling on the road, the belt ends must withstand high load concentrations, centrifugal force and side thrust.

It is also known that the circumferentially extending side edges of the belt structure in radial tires exhibit a more critical state relative to the central part of the belt both because at the belt edges the shearing stresses are the highest between the different strips forming said structure, and because during the ride on a curve these areas are the most subjected to deformations induced by the reaction with the road surface.

It will be clearly understood how this critical state is enhanced in tires for two-wheel vehicles as compared with four-wheel vehicles, by the effect of said very high tilting of the wheel on a curve.

A further drawback which can generally take place in radial high-speed tires originates from the reduced capability of the sidewall to absorb instantaneous overloads connected with the state of the road surface that is, for example, the impact against a stone or a pothole which brings about a greater fatigue of the materials and, as a result, a reduction in the tire life.

In fact the element which is the cause of the impact (road unevenness) tends to reduce the distance between the bead and the tread thereby exerting efforts and anomalous deformations on the textile carcass cords, which will produce dangerous pinchings or even punctures in the carcass. Usually attempts are made to counteract the effects of these accidental overloads by a high inflation pressure, obviously to the detriment of the ride comfort.

Referring to the above described state of the art in connection with radial tires, intended for high performance both for cars and motorcycles, the tire of the invention aims at eliminating or at least substantially reducing the above drawbacks.

More specifically, it is an object of the present invention to generally increase the torsional strength of the sidewall in a radial tire (of the type provided for use both on four-wheel vehicles and two-wheel vehicles) by an element to be integrated in the structure of the carcass plies of the tire. In particular the reinforcement element is linked to the bead core and therefore is effective in stiffening the sidewall without adversely affecting the comfort of the tire during a normal ride.

Another object of the invention is to provide a radial tire having an improved resistance to sudden stress variations originating from the wheel/road impacts during the vehicle running, by virtue of the presence of the reinforcement element of the present invention consisting of single layer of cords which are inclined to the radial direction.

The object of the present invention is therefore a tire of the radial type having a carcass comprising at least one carcass ply with cords disposed at an angle of about 90° to the tire's mid-circumferential plane, the carcass ply cords being folded around tire bead cores axially from the inside to the outside; an elastomeric bead filler extending radially outwardly from each bead core; a tread band disposed on the crown of said tire; a belt structure interposed between said carcass and said tread band and at least one sidewall reinforcement ply positioned axially outwardly from said carcass ply, said reinforcement ply comprising textile cords inclined relative to the radial direction, characterized by the fact that the cords of said reinforcement ply have radially inner ends folded around said bead cores axially inwardly from the outside to the inside and are interposed between the turn up of said carcass ply and said bead core and that the cords of said reinforcement ply have radially outer ends extending toward the edges of the belt structure, radially outwardly past the zone of maximum width of the tire, and spaced apart therefrom by a distance not greater than 10% of the section height of the tire.

Advantageously the textile cords are made of nylon and are inclined by an angle in the range of 30° to 60°; in a preferred embodiment by an angle of about 45°.

Advantageously, in these tires the end of said ply turns around the bead core, without however going up past the radial height of the upper end of said bead filler.

Preferably the belt structure comprises two radially superposed strips having cords of aramide fiber and disposed at an angle of 10° to 30°, preferably 15°.

The invention will be now described with reference to preferred embodiment thereof, given hereinafter by way of non-limiting example with the aid of the accompanying drawings, in which:

Figure 1    is a sectional view of the left half of the structure of a tire in accordance with the invention, of the type provided for use on four-wheel vehicles; the right half is a mirror image thereof; and

Figure 2    is a full cross-sectional view of a tire in accordance with the invention designed for use on two-wheel vehicles.

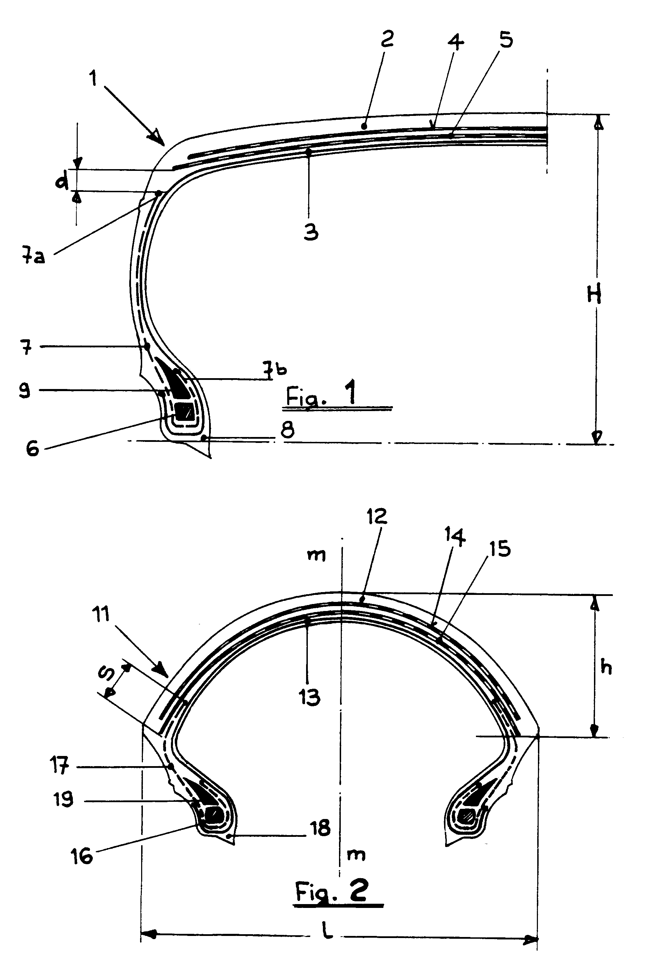

Referring to Fig. 1, the tire of the invention, denoted by 1, consists of a carcass structure comprising one or more carcass plies 3, provided with radially extending textile cords folded back from the axial inside to the outside around at least a metal bead core 6 disposed in the area of the tire bead 8, over which, at a radially outer position, a filler strip 9 of elastomeric material and of substantially triangular shape is placed, in a known manner.

For the sake of simplicity, Fig. 1 only shows the left half of the tire, being understood that the same structure is provided on the side not shown.

Disposed on the crown of the tire carcass, in the usual manner, is a tread band 2 and inserted between the carcass and tread band is a belt structure comprising two radially superposed strips 4 and 5 of cords mutually inclined in opposite directions, preferably symmetrically, with respect to the mid-circumferential plane of the tire.

The value of the inclination angle of these cords is preferably in the range of 10° to 30°. The belt strips are formed in any appropriate known manner and in particular can comprise textile cords made of aramide fiber of the type commercially available under the trademark Kevlar.

In accordance with a preferred embodiment of the invention, the tire further comprises a single reinforcement ply 7, disposed at an axially outer position relative to the carcass plies, having reinforcement cords inclined by about 45° relative to the radial direction, that is relative to the inclination of the carcass cords of the sidewall, axially folded back from the outside to the inside around the bead core 6, and the radially outer edge 7a of which is situated in the upper portion of the tire sidewall, namely radially outwardly the zone of the maximum width of the tire, radially spaced apart from the edge of the belt structure by a distance $\overline{d}$ which is not higher than 10% of the section height H of the tire.

The angle of the tangent formed by the textile cords of the ply 7 relative to the radial direction, generally lies between 30° and 60°. The cords in said reinforcement ply are of the textile type, preferably made of nylon.

The radial inner ply ends 7b of the cords 7 are folded back around the bead core radially and go up to an axially inner position to a small degree, preferably not beyond the radial height of the upper end of the bead filler 9.

Under the action of an accelerating or braking torque applied to the tire sidewall, the cords of the ply 7 that are inclined in the opposite direction relative to the acting direction of the torque, behave somewhat like leaf springs counteracting the twisting moment. Therefore an increase in the torsional strength of the tire sidewall is achieved so that the torque efforts can be better withstood.

As a result, a relative rotation between the tread band and the assembly consisting of the wheel hub and the tire bead is prevented, which rotation has a tendency to occur during these acceleration and deceleration stages.

Taking into account the fact that the tire sidewall has both the reinforcement cords 7 and the radial cords of the carcass plies 3, it is possible to see that in the tire of the invention a sort of crossed structure resisting torque variations is formed. Therefore an important increase of the torsional effort applicable to the tire sidewall is achieved.

This specific stiffness of the sidewall in connection with the torsional movements following the acceleration and braking movements is an advantageous effect and does not entail overall stiffening of the structure under conditions of normal ride.

This increase in the sidewall stiffness also represents a reinforcement action against the above mentioned instantaneous overloads that the tire may absorb. In fact the reinforcement ply of the invention having cords that are inclined relative to the carcass cords, by forming a sort of close-mesh net linking the radial cords at several locations, helps the radial cords in withstanding the sudden overloads occurring for example as a result of tire impact against road surface unevenness.

The orientation of the cords in the reinforcement ply in accordance with the invention also greatly helps in absorbing said sudden impacts, in particular under critical conditions, for example when the tire is partially flat.

Therefore the tire of the invention obtains a reduction in the fatigue of the material and therefore the tire has a longer lifetime which is considerable in case of tires for four-wheeled vehicles.

The structure of the tire in accordance with the invention also offers an additional advantage when it is used in motorcycle tires, as shown in the embodiment of Fig. 2 in which the same reference numerals but increased by 10 have been allocated to the corresponding elements shown in Figure 1.

In particular the invention is advantageous in tires for motorcycles having a high camber value, that is the value of the ratio between the tread height h measured at the mid-circumferential plane (camber), and the maximum tread width L; which ratio in these tires is not lower than 0.15 as compared to a normal value of about 0.02 for tires of four-wheel vehicles.

It is known that in these tires when the present belt structures have a good behaviour during a straight ride, their behaviour is inappropriate while negotiating a curve in the road and vice-versa; in particular in tires to be mounted on the rear axis, the behaviour of belts with cords having a low angle of inclination (relative to the circumferential direction) is of the first type, whereas the behaviour of belts having a high angle of inclination is of the second type.

Since it is impossible to manufacture belts provided with both the above features, in order to solve the above discussed problem motorcycle tires have been provided with the end of the reinforcement ply inserted under the corresponding belt end.

The tire 11 of Fig. 2 for motorcycles is comprised of a tread band 12, much more cambered and extended than that of a car tire, and carcass plies 13 having textile cords extending radially and axially folded back from the inside to the outside around the metal bead cores 16 disposed in the area of the tire beads 18; in this case also known bead fillers 19 are provided.

The tire comprises a belt structure formed with two radially superposed strips 14, 15 of crossed cords, mutually inclined at an angle included between 10° and 30° measured on the vulcanized tire at the mid-circumferential plane m-m relative to the circumferential tire direction.

In accordance with the invention, the tire further comprises the already mentioned reinforcement ply 17, having textile cords, made of nylon for example, disposed at about 45° relative to the radial direction, that is to the sidewall cords. More generally this angle is in the range of 30° to 60°. Said reinforcement ply 17, is disposed at an axially outer position relative to the carcass plies, and folded back around the bead core 16 in the same manner as above described, so as to be fixedly fastened to the bead cores.

In a per se known manner it extends radially outwardly along the carcass sidewall even past the above stated limit, so as to penetrate under the end of the belt structure over a portion sufficient to fixedly engage it thereto, which means that the overlapping s between the belt structure and the reinforcement ply must be at least 20 mm, and more particularly in the range of 20 mm to 50 mm, so that the reinforcement ply is also secured to the belt.

In this way in motorcycle tires further advantages are achieved which compensate the low level of comfort due to the overlapping between the reinforcement ply end and the belt edge.

In fact the result of said overlap consists in stiffening the belt at the ends thereof, that is in the region resting on the ground when going around a curve, because the assembly formed with the reinforcement ply fastened to the bead and under the belt end, and the carcass plies behave to some extent like an additional belt structure having cross-biased plies and the function of which is accomplished only when the camber angles of the running tire are close to the maximum permissible values, that is in the situation in which stresses due to sudden or violent impacts against the road unevenness are more dangerous. The above-said achieved advantage consists in having maintained said stiffening of the belt edges without suffering the important reduction in comfort, undergone by the prior art tires, during a normal ride.

As to the tire of the invention in general, it is apparent that if the cords of the reinforcement ply are inclined in the same way, the maximum advantage will be reached in a specific case of use (for example in the presence of an accelerating torque) and a reduced or minimum advantage will be present in the opposite case; vice-versa, if the cords are inclined in the opposite direction in the two sidewalls the achieved advantage will be smaller than the maximum obtainable one, although present in both cases.

The solution relating to the same inclination of the cords in both of the tire sidewalls will be then preferably adopted with tires having an asymmetric or directional pattern. Thus it is preferable to indicate the right running direction on the tire sidewall, that is to indicate the mounting direction of the tire on the vehicle.

As an indication, said situation will be the preferred one in tires for two-wheel vehicles, whereas the solution providing reinforcement plies having cords inclined in the opposite way on the two sidewalls will be preferably used in tires for cars.

The invention attains a certain number of further advantages and improvements. Firstly, a greater stiffening of the bead is achieved, mainly due to the fact that the bead filler 9 or 19 is now enclosed between the carcass ply and the reinforcement ply so that, by the effect of the impossibility of compressing the elastomeric material, in the presence of a deforming force the bead acquires a higher stiffness than it normally would have due to its rheometric features, which brings about an increase in the tire's ability to resist torsional stresses.

Finally a displacement of the neutral axis toward the outside of the tire is generally achieved, which has a beneficial effect on the fatigue of the cords and, limitedly to the motor-cycle tires, also a better distribution of the load between wheel and road is ensured during the ride on a curve, even in case of sudden and violent stresses.

## Claims

1. Tire of the radial type having a carcass comprising at least one carcass ply with cords disposed at an angle of about 90° to the tire's mid-circumferential plane, the carcass ply cords being folded around tire bead cores axially from the inside to the outside; an elastomeric bead filler extending radially outwardly from each bead core; a tread band disposed on the crown of said tire; a belt structure interposed between said carcass and said tread band and at least one sidewall reinforcement ply positioned axially outwardly from said carcass ply, said reinforcement ply comprising textile cords inclined relative to the radial direction, characterized by the fact that the cords of said reinforcement ply have radially inner ends folded around said bead cores axially inwardly from the outside to the inside and are interposed between the turn up of said carcass ply and said bead core and that the cords of said reinforcement ply have radially outer ends extending toward the edges of the belt structure, radially outwardly past the zone of maximum width of the tire, and spaced apart therefrom by a distance not greater than 10% of the section height of the tire.

2. A tire according to claim 1, characterized by the fact that said textile cords are inclined by an angle in the range of 30° to 60°.

3. A tire according to claim 2, characterized by the fact that said cords are inclined by an angle of about 45°.

4. A tire according to claim 1, characterized by the fact that the turn up of the radially inner ends of the reinforcement ply goes up at least as far as the radial height of the upper end of said bead core.

5. A tire according to claim 4, characterized by the fact that the radially inner ends of the reinforcement ply does not extend past the radial height of the upper end of the filler associated with said bead core.

6. A tire according to claim 1, characterized by the fact that said textile cords are made of nylon.

7. A tire for two-wheel vehicles according to any one of claims 1 to 6.

Fig. 1

Fig. 2

European Patent Office

**EUROPEAN SEARCH REPORT**

Application Number

EP 91 11 8313

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 411 666 (YOKOHAMA) * Page 3, line 10 - page 4, line 3; page 4, lines 5-22; page 5, lines 5-30; page 6, lines 1-10; figure 1 * | 1,2,3,4 ,6,7 | B 60 C 9/09 B 60 C 15/06 |
| A | FR-A-1 522 420 (UNIROYAL) * Page 2, right-hand column, lines 1-3; page 3, lines 1-5 * | 1 | |
| A | US-A-3 442 315 (H. MIRTAIN) | | |
| A | FR-A-2 386 423 (PIRELLI) | | |
| A | FR-A-2 448 444 (CONTINENTAL) | | |
| A | EP-A-0 133 255 (PIRELLI) | | |

TECHNICAL FIELDS SEARCHED (Int. Cl.5)

B 60 C

The present search report has been drawn up for all claims

| Place of search | Date of completion of the search | Examiner |
|---|---|---|
| THE HAGUE | 04-02-1992 | SCHMITT L.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)